# EUROPEAN PATENT SPECIFICATION

(11) **EP 3 217 357 B1**
(45) Date of publication and mention of the grant of the patent: **13.05.2020**
(21) Application number: 16159124.3
(22) Date of filing: 08.03.2016
(51) Int. Cl.: G06T 7/20

(54) **ESTIMATION OF MOVEMENT OF A TARGET OBJECT**
BEWEGUNGSABSCHÄTZUNG EINES ZIELOBJEKTS
ESTIMATION DE MOUVEMENT D'UN OBJET CIBLE

(43) Date of publication of application: 13.09.2017
(73) Proprietor: Veoneer Sweden AB, 447 83 Vårgårda (SE)
(72) Inventor: Ankelhed, Daniel, SE-583 34 Linköping (SE); Elbornsson Skogstjärna, Jonas, SE-591 35 Motala (SE); Ollesson, Niklas, SE-582 36 Linköping (SE)
(74) Representative: Kransell & Wennborg KB

(56) References cited:
- US-A- 5 592 176
- US-A1- 2006 291 693
- US-A1- 2015 363 940
- ALEXANDER BARTH ET AL: "Where will the oncoming vehicle be the next second?", INTELLIGENT VEHICLES SYMPOSIUM, 2008 IEEE, IEEE, PISCATAWAY, NJ, USA, 4 June 2008 (2008-06-04), pages 1068-1073, XP031318855, ISBN: 978-1-4244-2568-6

## Description

### TECHNICAL FIELD

Embodiments presented herein relate to a method, an electronic control unit, a computer program, and a computer program product for estimating movement of a target object.

### BACKGROUND

In general terms, some existing adaptive cruise control and forward collision warning systems provide radar sensor solutions optionally supplemented by a forward-looking monochrome camera provided in the ego vehicle and aimed at detecting a target vehicle.

Radar sensors work well for longitudinal distance and velocity measurements but may not be able to detect certain traffic situations that rely on precise and robust lateral tracking.

Document US 2013/0253796 A1 aims to provide a more universal approach for cameras to enhance current ACC or FCW systems based on radar, camera, or a combination thereof and provide robust tracking and recognition of target vehicles. Particularly, US 2013/0253796 A1 discloses a camera system with a vehicle detection model adapted to detect a target vehicle's turning intention. The proposed systems and methods perform feature tracking across vehicle surfaces based on a complete three-dimensional model of the vehicle using two-dimensional data captured by the camera. The three-dimensional model is used to track a side of the target vehicle even though the back of the target vehicle, which was originally detected by the camera, moves out of the camera's field-of-view.

Assume that one aim is to accurately estimate properties such as the position, pose and yaw rate of the target vehicle. One issue that arises is that the information obtained from the first few measurements of these properties is not enough to initialize a complex dynamic model that includes these properties so that the estimates converge to the true values. This is especially true if the target vehicle and the ego vehicle are separated a relatively long distance. In some cases, for instance in scenarios when the ego vehicle is overtaken by the target vehicle, classification measurements are not available since the rear side of the target vehicle is not totally visible.

US 2015/363940 A1 relates generally to machine vision systems and more specifically to systems and methods for tracking objects.

In "Will the oncoming vehicle be the next second?" by A. Berth et al, 4 June 2008 is presented an image based approach for fast and robust tracking of vehicles from a moving platform.

Hence, there is still a need for improved mechanism for estimating movement of a target vehicle.

### SUMMARY

An object of embodiments herein is to provide efficient estimation of the movement of the target object.

The invention is defined by the appended claims and some aspects of it may be summarised as follows. According to a first aspect there is presented a method for estimating movement of a target object. The method is performed by an electronic control unit. The method comprises obtaining a sequence of images from an image capturing system. The method comprises detecting a target object in the sequence of images. The method comprises estimating movement of the target object by firstly applying a first dynamic estimation model to the sequence of images and a secondly applying a second dynamic estimation model to the sequence of images. The first dynamic estimation model is used to estimate a first set of properties and the second dynamic estimation model is used to estimate a second set of properties extending the first set of properties.

Advantageously this provides efficient estimation of the movement of the target object. Assuming that the target object represents a target vehicle, this provides efficient estimation of the movement of the target vehicle. Advantageously, firstly applying the first dynamic estimation model to the sequence of images and a secondly applying a second dynamic estimation model to the sequence of images enables computational resources of the electronic control unit to be efficiently used.

According to a second aspect there is presented an electronic control unit for estimating movement of a target object. The electronic control unit comprises an obtain module configured to obtain a sequence of images from an image capturing system. The electronic control unit comprises a detect module configured to detect a target object in the sequence of images. The electronic control unit comprises an estimate module configured to estimate movement of the target object by firstly applying a first dynamic estimation model to the sequence of images and a secondly applying a second dynamic estimation model to the sequence of images. The first dynamic estimation model is used to estimate a first set of properties and the second dynamic estimation model is used to estimate a second set of properties extending the first set of properties.

According to a third aspect there is presented an automotive vehicle comprising an electronic control unit according to the second aspect. According to a fourth aspect there is presented a computer program for electronic control unit, the computer program comprising computer program code which, when run on an electronic control unit, causes the electronic control unit to perform a method according to the first aspect.

According to a fifth aspect there is presented a computer program product comprising a computer program according to the fourth aspect and a computer readable storage medium on which the computer program is stored.

It is to be noted that any feature of the first, second, third, fourth, and fifth aspects may be applied to any other aspect, wherever appropriate. Likewise, any advantage of the first aspect may equally apply to the second, third, fourth, and/or fifth aspect, respectively, and vice versa. Other objectives, features and advantages of the enclosed embodiments will be apparent from the following detailed disclosure, from the attached dependent claims as well as from the drawings.

### BRIEF DESCRIPTION OF THE DRAWINGS

The inventive concept is now described, by way of example, with reference to the accompanying drawings, in which:
Fig. 1 is a schematic diagram illustrating an ego vehicle and a target vehicle according to embodiments;
Fig. 2a is a schematic diagram showing functional units of an electronic control unit according to an embodiment;
Fig. 2b is a schematic diagram showing functional modules of an electronic control unit according to an embodiment;
Fig. 3 shows one example of a computer program product comprising computer readable storage medium according to an embodiment; and
Figs. 4 and 5 are flowcharts of methods according to embodiments.

### DETAILED DESCRIPTION

The scope of the invention is defined by the appended claims. The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the inventive concept to those skilled in the art. Like numbers refer to like elements throughout the description.

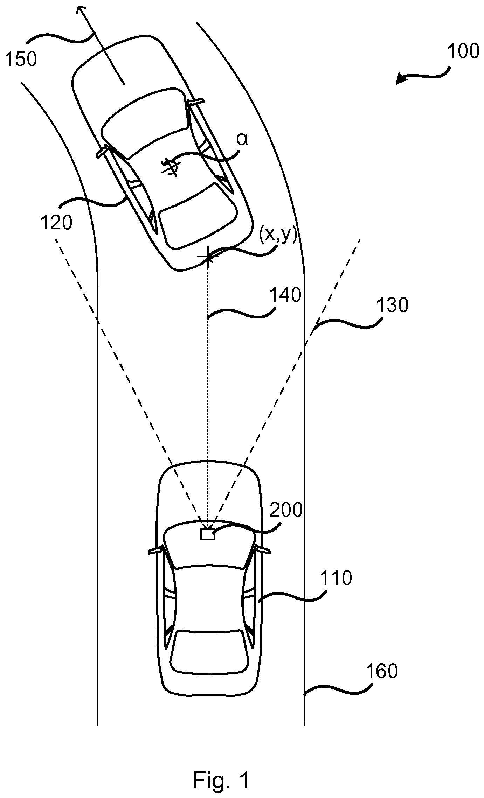

Fig. 1 is a schematic diagram 100 illustrating a top view of an ego vehicle 110 and a target vehicle defining a target object 120. The ego vehicle 110 and the target object 120 are travelling along a path 160.

The ego vehicle 110 comprises an electronic control unit 200. The electronic control unit 200 comprises, or is co-located with, an image capturing system. The image capturing system is configured to capture images within a field-of-view 130. The target object 120 is assumed to be located at a position (x, y) at a distance 140 from the image capturing system. The target object 120 is assumed to be travelling in a direction defined by the pose 150 of the target object 120 with a yaw rate α, where the yaw rate is defined by the target object's 120 angular velocity around its vertical axis.

Assume that the aim of the electronic control unit 200 is to accurately estimate properties such as the position (x, y), pose 150 and yaw rate α of the target object 120. The embodiments disclosed herein hence relate to estimating movement of the target object 120. In order to obtain such estimation of movement there is provided an electronic control unit 200, a method performed by the electronic control unit 200, a computer program product comprising code, for example in the form of a computer program, that when run on an electronic control unit 200, causes the electronic control unit 200 to perform the method.

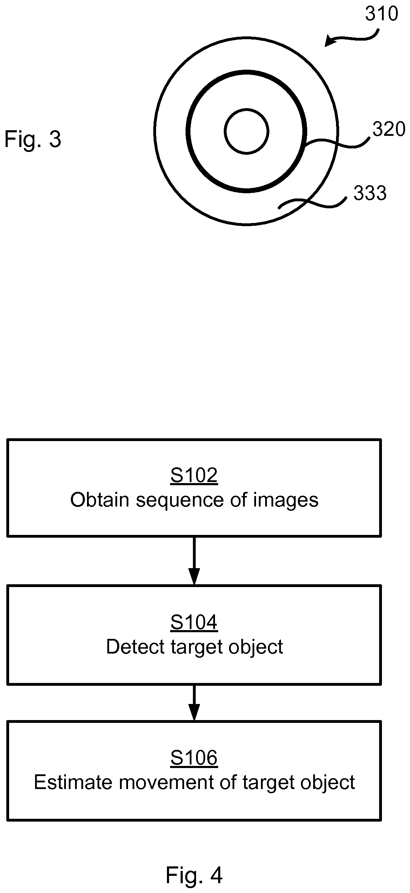

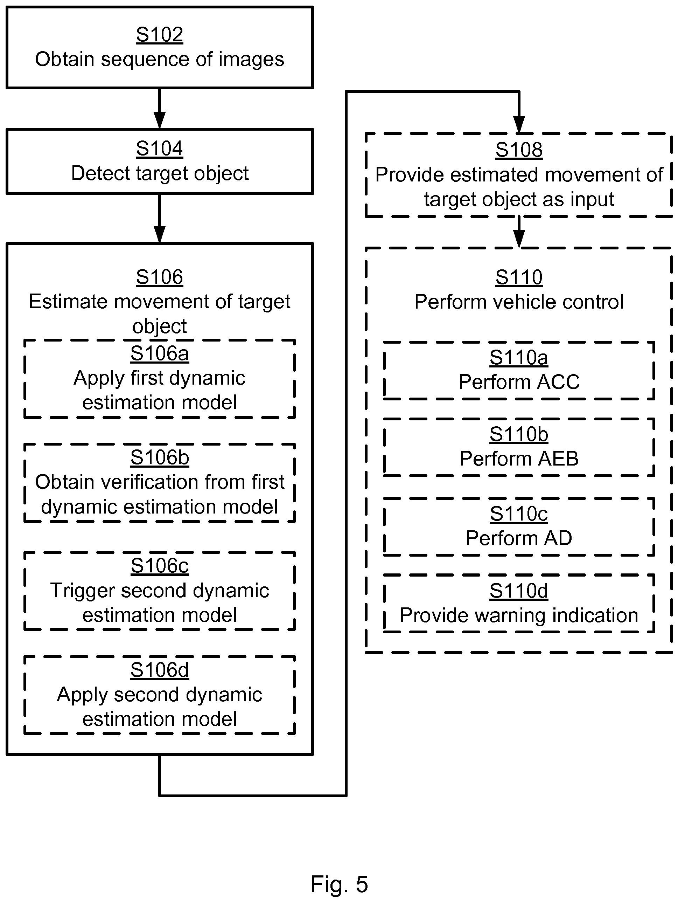

Figs. 4 and 5 are flow chart illustrating embodiments of methods for estimating movement of a target object 120. The methods are performed by the electronic control unit 200. The methods are advantageously provided as computer programs 320.

Reference is now made to Fig. 4 illustrating a method for estimating movement of the target object 120 as performed by the electronic control unit 200 according to an embodiment. Parallel reference is continued to Fig. 1.

The movement of the target object 120 is estimated from a sequence of images. Hence, the electronic control unit 200 is configured to perform step S102:
S102: The electronic control unit 200 obtains a sequence of images from an image capturing system.

Once having obtained the sequence of images the electronic control unit 200 then processes the sequence of images as in step S104:
S104: The electronic control unit 200 detects a target object 120 in the sequence of images.

Hence, it is assumed that the target object 120 is detected in the sequence of images. Movement of the target object 120 is then estimated by the electronic control unit 200 using a two-step procedure. Particularly, the electronic control unit 200 is configured to estimate movement of the target object 120 by performing step S106.

S106: The electronic control unit 200 estimates movement of the target object 120 by firstly applying a first dynamic estimation model to the sequence of images and a secondly applying a second dynamic estimation model to the sequence of images. The first dynamic estimation model is used to estimate a first set of properties. The second dynamic estimation model is used to estimate a second set of properties extending the first set of properties. Embodiments relating to the first dynamic estimation model and the second dynamic estimation model will be disclosed below.

The method for estimating movement of the target object 120 is especially beneficial in scenarios where problems arise during initialization of the movement estimation. Such problems could arise due to poor measurements, such as measurements with poor accuracy and/or resolution, or even lack of measurements, being available during initialization of the movement estimation. Problems arising during initialization of the movement estimation could cause the movement estimation to fail. Such problems are avoided by the herein disclosed methods for estimating movement of the target object 120.

The method for estimating movement of the target object 120 is therefore especially beneficial when the target object 120 is detected at a long range (typically where the distance 140 is larger than 80m) where there may be a reduced accuracy in measurements, and/or where only one side, typically the rear side, of the target object 120 is captured in the sequence of images.

Another scenario in which method for estimating movement of the target object 120 is beneficial is thus where the ego vehicle 110 is overtaken by the target object 120 which means that only a part of the overtaking vehicle is detected by the image capturing system until it is entirely within the field-of-view 130 of the image capturing system.

Thus, whilst above mentioned document US 2013/0253796 A1 focuses on movement estimation at close distance, the herein disclosed embodiments relate to movement estimation at long distances.

Embodiments relating to further details of estimating movement of the target object 120 as performed by the electronic control unit 200 will now be disclosed.

In some aspect the first dynamic estimation model and the second dynamic estimation model operate on different sets of images in the sequence of images; the first dynamic estimation model operates on a first part of images in the sequence of images and the second dynamic estimation model operates on a second part of images in the sequence of images. Here the first part of images in the sequence of images occurs timewise earlier than the second part of images in the sequence of images. Thus assuming that there are in total K number of frames in the sequence of images, then the first part of images is composed of frames 1 to frame k, and the second part of images is composed of frames k+1 to frame K.

There may be different ways to define the first dynamic estimation model and the second dynamic estimation model, and to differentiate first dynamic estimation model from the second dynamic estimation model. Different embodiments relating thereto will now be described in turn.

For example, the first dynamic estimation model and the second dynamic estimation model could be differentiated in terms of complexity. Here, complexity could be defined by the number of operations being performed, or the type of operations being performed. For example, the second dynamic estimation model could be more complex than the first dynamic estimation model. Hence, assume that the first dynamic estimation model has a first complexity, and that the second dynamic estimation model has a second complexity. Then, according to an embodiment, the second complexity is higher than the first complexity.

For example, the first dynamic estimation model and the second dynamic estimation model could be differentiated in terms of operating states. For example, the second dynamic estimation model could have more operating states than the first dynamic estimation model. Hence, assume that the first dynamic estimation model has a first number of operating states, and that the second dynamic estimation model has a second number of operating states. Then, according to an embodiment, the second number is higher than the first number.

For example, the first dynamic estimation model can be regarded as a two-dimensional model and the second dynamic estimation model can be regarded as a three-dimensional model. In this respect, the first dynamic estimation model can have operating states relating to position (x, y) of the target object 120, velocity of the target object 120, and size (in terms of width and height) of the target object 120. This representation describes a point in space with a surface associated with it, and therefor it can be called a two-dimensional model. The first dynamic estimation model is particularly suitable for long range filtering, without being dependent on stereo measurements at long distances. It is also suitable for short range filtering at an initial stage of the movement estimation of the target object 120. Further, the operating states of the second dynamic estimation model may overlap and extend the set of operating states used in the first dynamic estimation model. In this respect, the second dynamic estimation model can have operating states relating to position (x, y) of the target object 120, speed of the target object 120, pose 150 of the target object 120, yaw rate α of the target object 120, width of the target object 120, height of the target object 120, and length of the target object 120. This representation describes a rectangular box in space which can be rotated around its z-axis (defined by the yaw rate α).

For examples, as noted above, the second dynamic estimation model is used to estimate a second set of properties extending the first set of properties. In this respect the second dynamic estimation model could reparametrize some of the operating states of the first dynamic estimation model. Hence, according to an embodiment, the second dynamic estimation model reparametrizes at least one property of the first set of properties (as used by the first dynamic estimation model).

Reference is now made to Fig. 5 illustrating methods for estimating movement of the target object 120 as performed by the electronic control unit 200 according to further embodiments. It is assumed that steps S102, S104, S106 are performed as disclosed above. Parallel reference is continued to Fig. 1.

At long distances 140, or initially, it can be cumbersome to accurately estimate the heading angle of the target object 120; at long distances 140 the measurement is not accurate, and during initial movement estimation the heading angle may not be known. Therefore, the first dynamic estimation model can be used by the electronic control unit 200 until the velocity of the target object 120 is estimated accurately.

Hence, according to an embodiment the electronic control unit 200 is configured to, as part of step S106, perform step S106a when estimating the movement of the target object 120:
S106a: The electronic control unit 200 applies the first dynamic estimation model to estimate velocity and position (x, y) of the target object 120. The velocity comprises speed and heading angle of the target object 120.

A verification indicates when the velocity and position (x, y) of the target object 120 have been accurately estimated. Hence, according to an embodiment the electronic control unit 200 is configured to, as part of step S106, perform step S106b when estimating the movement of the target object 120:
S106b: The electronic control unit 200 obtains a verification from the first dynamic estimation model. The verification could indicate accurate estimations having been obtained by the first dynamic estimation model.

The verification as obtained in step S106b acts as a trigger for the electronic control unit 200 to use the second dynamic estimation model for estimating the movement of the target object 120. Hence, according to an embodiment the electronic control unit 200 is configured to, as part of step S106, perform step S106c when estimating the movement of the target object 120:
S106c: The electronic control unit 200 triggers estimation of the movement of the target object 120 using the second dynamic estimation model upon having received the verification.

The current (values of) the operating states of the first dynamic estimation model is then used to initialize the second dynamic estimation model. Hence, according to an embodiment, output from the first dynamic estimation model is used to initialize the second dynamic estimation model. The first dynamic estimation model is not used anymore for estimating the target object 120 after the second dynamic estimation model is initialized.

When the target object 120 is moving relative the image capturing system the heading angle can be estimated by filtering positions (x, y) of the target object 120 in subsequent image frames in the sequence of images. For target objects 120 at a relative medium range distance 140 this is the preferred way to estimate the heading angle since either inaccurate stereo measurements are available or no stereo measurements at all are available, depending on the type of camera in the image capturing system, see below. When the target object 120 is not moving relative the image capturing system this type of estimation is not possible. If the target object 120 is not moving relative the image capturing system but located at a relative short distance 140 the pose 150 may be measureable. Hence if it is assumed that the heading angle is the same as the pose 150, the pose measurement can be used as an heading angle measurement. Hence, according to an embodiment the electronic control unit 200 is configured to, as part of step S106, perform step S106d when estimating the movement of the target object 120:
S106d: The electronic control unit 200 apply the second dynamic estimation model to estimate pose 150 and yaw rate α of the target object 120.

There are different operations that the electronic control unit 200 can be configured to perform once having estimated the movement of the target object 120 as in step S106. For example, the estimated movement of the target object 120 can be used as input to a vehicle control system. Hence, according to an embodiment the electronic control unit 200 is configured to perform step S108:
S108: The electronic control unit 200 provides the estimated movement of the target object 120 as input to at least one vehicle control system.

According to some embodiments the at least one vehicle control system is part of, or at least controlled by, the electronic control unit 200. Hence, according to an embodiment the electronic control unit 200 is configured to perform step S110:
S110: The electronic control unit 200 performs vehicle control using the at least one vehicle control system and based on the estimated movement of the target object 120.

There are different examples of vehicle control systems. For example, the vehicle control system could be an Adaptive Cruise Control (ACC) system, an Automatic Emergency Braking (AEB) system, or an Autonomous Driving (AD) system.

Hence, according to an embodiment the electronic control unit 200 is configured to perform at least one of steps S110a, S110b, and S110c as part of step S110:
S110a: The electronic control unit 200 performs Adaptive Cruise Control (ACC). The electronic control unit 200 is thereby configured to adjust the speed of the ego vehicle 110 to maintain a safe distance to the target object 120.
Snob: The electronic control unit 200 performs Automatic Emergency Braking (AEB). The electronic control unit 200 is thereby configured to control a braking system of the ego vehicle 110 to avoid collision with the target object 120.
S110c: The electronic control unit 200 performs Autonomous Driving (AD). The electronic control unit 200 is thereby configured to control navigation of the ego vehicle 110 without human input.

Any given step of steps Snoa-Snoc could be combined with at least one other step of steps Snoa-Snoc.

Additionally or alternatively, the electronic control unit 200 is configured to provide warnings (such as sounds or visual alerts) to a driver of the ego vehicle 110. Hence, according to an embodiment the electronic control unit 200 is configured to perform step Snod as part of step S110.

Snod: The electronic control unit 200 provides a warning indication to a user interface.

Step Snod could be combined with any of step Snoa-Snoc.

In some embodiment it is assumed that a velocity vector (as defined by the pose 150) of the target object 120 points in the same direction as the front of the target object 120 points. This assumption is approximately valid as long as the target object 120 is not turning too much. In this respect, pose 150 and heading angle can be assumed to be the same as long as there is no slip, i.e., as long as the target object 120 is not sliding sideways.

As disclosed with reference to Fig. 1 the target object 120 could be a vehicle. Examples of such vehicles are automotive vehicles such as cars, trucks, motor bicycles, trucks, lorries, etc.

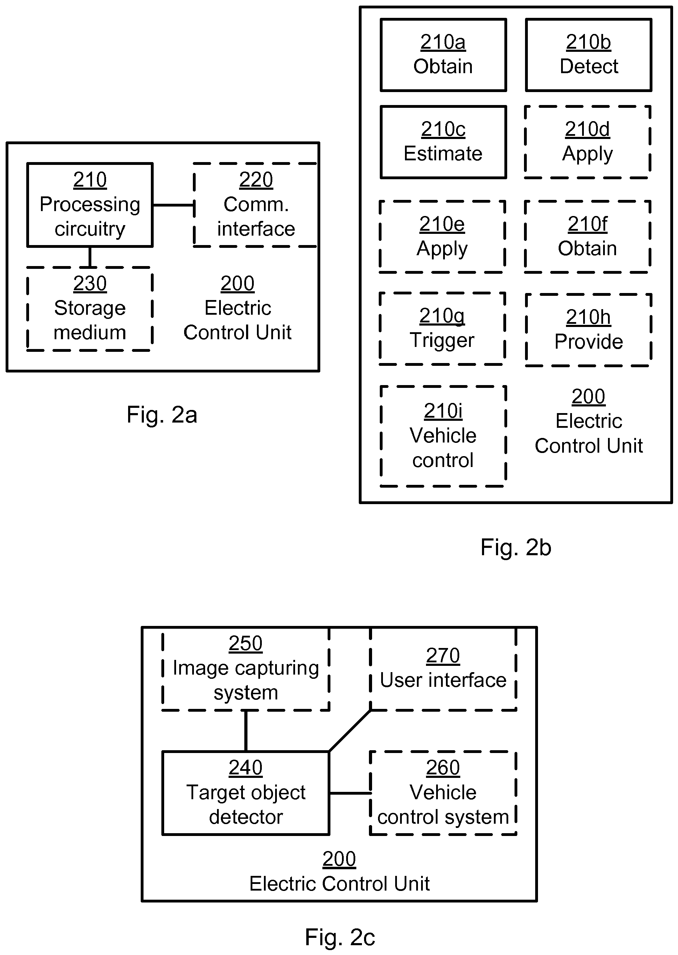

Fig. 2a schematically illustrates, in terms of a number of functional units, the components of an electronic control unit 200 according to an embodiment. Processing circuitry 210 is provided using any combination of one or more of a suitable central processing unit (CPU), multiprocessor, microcontroller, digital signal processor (DSP), etc., capable of executing software instructions stored in a computer program product 310 (as in Fig. 3), e.g. in the form of a storage medium 230. The processing circuitry 210 may further be provided as at least one application specific integrated circuit (ASIC), or field programmable gate array (FPGA).

Particularly, the processing circuitry 210 is configured to cause the electronic control unit 200 to perform a set of operations, or steps, S102-S110d, as disclosed above. For example, the storage medium 230 may store the set of operations, and the processing circuitry 210 may be configured to retrieve the set of operations from the storage medium 230 to cause the electronic control unit 200 to perform the set of operations. The set of operations may be provided as a set of executable instructions.

Thus the processing circuitry 210 is thereby arranged to execute methods as herein disclosed. The storage medium 230 may also comprise persistent storage, which, for example, can be any single one or combination of magnetic memory, optical memory, solid state memory or even remotely mounted memory. The electronic control unit 200 may further comprise a communications interface 220 at least configured for communications with the image capturing system, the vehicle control system, and the user interface, if the image capturing system, the vehicle control system, and the user interface are not part of the electronic control unit 200. As such the communications interface 220 may comprise one or more transmitters and receivers, comprising analogue and digital components. The processing circuitry 210 controls the general operation of the electronic control unit 200 e.g. by sending data and control signals to the communications interface 220 and the storage medium 230, by receiving data and reports from the communications interface 220, and by retrieving data and instructions from the storage medium 230. Other components, as well as the related functionality, of the electronic control unit 200 are omitted in order not to obscure the concepts presented herein.

Fig. 2b schematically illustrates, in terms of a number of functional modules, the components of an electronic control unit 200 according to an embodiment. The electronic control unit 200 of Fig. 2b comprises a number of functional modules; an obtain module 210a configured to perform step S102, a detect module 210b configured to perform step S104, and an estimate module 210c configured to perform step S106.

The electronic control unit 200 of Fig. 2b may further comprises a number of optional functional modules, such as any of an apply module 210d configured to perform step S106a, an apply module 210e configured to perform step S106d, an obtain module 210f configured to perform step S106b, a trigger module 210g configured to perform step S106c, a provide module 210h configured to perform step S108, and a vehicle control module 210i configured to perform any of steps S110, Snoa, Snob, Snoc, Snod.

In general terms, each functional module 210a-210g may in one embodiment be implemented only in hardware or and in another embodiment with the help of software, i.e., the latter embodiment having computer program instructions stored on the storage medium 230 which when run on the processing circuitry makes the electronic control unit 200 perform the corresponding steps mentioned above in conjunction with Fig 2b. It should also be mentioned that even though the modules correspond to parts of a computer program, they do not need to be separate modules therein, but the way in which they are implemented in software is dependent on the programming language used. Preferably, one or more or all functional modules 210a-210g may be implemented by the processing circuitry 210, possibly in cooperation with functional units 220 and/or 230. The processing circuitry 210 may thus be configured to from the storage medium 230 fetch instructions as provided by a functional module 210a-210g and to execute these instructions, thereby performing any steps as will be disclosed hereinafter.

Fig. 2c schematically illustrates, in terms of a number of functional modules, the components of an electronic control unit 200 according to an embodiment. The electronic control unit 200 of Fig. 2c comprises a target object detector 240. The target object detector 240 is configured to estimate movement of the target object 120. In this respect the target object detector 240 may implement functionality of the obtain module 210a, the detect module 210b, and the estimate module 210c and hence be configured to perform steps S102, S104, S106.

The electronic control unit 200 of Fig. 2c optionally comprises an image capturing system 250. The image capturing system 250 is configured to capture a sequence of images in its field-of-view 130 and to provide the captures sequence of images to the target object detector 240. In this respect, the image capturing system 250 can comprise a stereo camera system or a mono camera system. With a mono camera, several image frames could be needed in order for the target object detector 240 to estimate the distance 140 to the target object 120 whilst for images from a stereo camera target object detector 240 could apply triangulation to determine depth, and hence estimate the distance 140, in the captured images.

The electronic control unit 200 of Fig. 2c optionally comprises a vehicle control system 260. The target object detector 240 can then be configured to provide the estimated movement of the target object 120 as input to the vehicle control system 260 and hence be configured to perform step S108. The vehicle control system 260 is configured to perform ACC, AEB, and/or AD and hence be configured to perform any of steps S110a, Snob, and S110c. The electronic control unit 200 of Fig. 2c optionally comprises a user interface 270. The target object detector 240 can then be configured to provide a warning indication to the user interface 270 and hence be configured to perform step Snod.

The electronic control unit 200 may be provided as a standalone device or as a part of at least one further device. For example, although the electronic control unit 200 in Fig. 2c has been illustrated as (optionally) comprising a vehicle control system 260, the electronic control unit 200 may be provided as part of the vehicle control system 260. The same applies to the functional modules 210a-210g of Figs. 2b and the computer program 320 of Fig. 3 (see below).

Further, the electronic control unit 200 can be part of an automotive vehicle, as defined by the ego vehicle 110. Hence, according to an embodiment there is provided an automotive vehicle 110 comprising an electronic control unit 200 as herein disclosed.

Fig. 3 shows one example of a computer program product 310 comprising computer readable storage medium 330. On this computer readable storage medium 330, a computer program 320 can be stored, which computer program 320 can cause the processing circuitry 210 and thereto operatively coupled entities and devices, such as the communications interface 220 and the storage medium 230, to execute methods according to embodiments described herein. The computer program 320 and/or computer program product 310 may thus provide means for performing any steps as herein disclosed.

In the example of Fig. 3, the computer program product 310 is illustrated as an optical disc, such as a CD (compact disc) or a DVD (digital versatile disc) or a Blu-Ray disc. The computer program product 310 could also be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory. Thus, while the computer program 320 is here schematically shown as a track on the depicted optical disk, the computer program 320 can be stored in any way which is suitable for the computer program product 310.

In summary, according to at least some of the embodiments disclosed herein there have been presented a method for estimating movement of a target object 120 as performed by an electronic control unit 200. The electronic control unit 200 executes a first, simple, dynamic estimation model to estimate position and velocity of the target object 120. When speed and heading angle are estimated accurately the electronic control unit 200 initializes and executes a second, complex, dynamic estimation model using the estimates from the first dynamic estimation model as input. The second dynamical estimation model is used to estimate pose and yaw rate of the target object 120.

The inventive concept has mainly been described above with reference to a few embodiments. However, as is readily appreciated by a person skilled in the art, other embodiments than the ones disclosed above are equally possible within the scope of the inventive concept, as defined by the appended patent claims.

## Claims

1. A method for estimating movement of a target object (120), the method being performed by an electronic control unit (200), the method comprising:
obtaining (S102) a sequence of images from an image capturing system;
detecting (S104) a target object (120) in the sequence of images; and
estimating (S106) movement of the target object (120) by firstly applying a first dynamic estimation model to the sequence of images and a secondly applying a second dynamic estimation model to the sequence of images, wherein estimating the movement of the target object (120) comprises:
applying (S106a) the first dynamic estimation model to estimate velocity and position (x, y) of the target object (120), wherein the velocity comprises speed and heading angle of the target object (120), and
applying (S106d) the second dynamic estimation model to estimate pose (150) and yaw rate (α) of the target object (120),
wherein the first dynamic estimation model is used to estimate a first set of properties, defined by the velocity and the position (x, y) of the target object (120), wherein the second dynamic estimation model is used to estimate a second set of properties, defined by the pose (150) and the yaw rate (α), extending the first set of properties, and
wherein output from the first dynamic estimation model is used to initialize the second dynamic estimation model.

2. The method according to claim 1, wherein the first dynamic estimation model has a first number of operating states, wherein the second dynamic estimation model has a second number of operating states, and wherein the second number is higher than the first number.

3. The method according to any of the preceding claims, wherein the second dynamic estimation model reparametrizes at least one property of the first set of properties.

4. The method according to claim 1, further comprising:
obtaining (S106b) a verification from the first dynamic estimation model; and
triggering (S106c) estimation of the movement of the target object (120) using the second dynamic estimation model upon having received the verification.

5. The method according to claim 4, wherein the verification indicates accurate estimations having been obtained by the first dynamic estimation model

6. The method according to any of the preceding claims, further comprising:
providing (S108) the estimated movement of the target object (120) as input to at least one vehicle control system (260); and
performing (S110) vehicle control using the at least one vehicle control system (260) and based on the estimated movement.

7. The method according to claim 6, wherein performing vehicle control comprises at least one of:
performing (S110a) Adaptive Cruise Control (ACC);
performing (Snob) Automatic Emergency Braking (AEB);
performing (S110c) Autonomous Driving (AD); and/or
providing (S110d) a warning indication to a user interface (270).

8. The method according to any of the preceding claims, wherein the target object (120) is a vehicle.

9. An electronic control unit (200) for estimating movement of a target object (120), the electronic control unit (200) comprising:
an obtain module (210a) configured to obtain a sequence of images from an image capturing system;
a detect module (210b) configured to detect a target object (120) in the sequence of images; and
an estimate (210c) module configured to estimate movement of the target object (120) by firstly applying a first dynamic estimation model to the sequence of images and a secondly applying a second dynamic estimation model to the sequence of images, wherein the electronic control unit (200) further comprises, in order to estimate the movement of the target object (120):
an apply module (210d) configured to apply the first dynamic estimation model to estimate velocity and position (x, y) of the target object (120), wherein the velocity comprises speed and heading angle of the target object (120), and
an apply module (210e) configured to apply the second dynamic estimation model to estimate pose (150) and yaw rate (α) of the target object (120),
wherein the first dynamic estimation model is used to estimate a first set of properties, defined by the velocity and the position (x, y) of the target object (120), wherein the second dynamic estimation model is used to estimate a second set of properties, defined by the pose (150) and the yaw rate (α), extending the first set of properties, and
wherein output from the first dynamic estimation model is used to initialize the second dynamic estimation model.

10. An automotive vehicle (110) comprising an electronic control unit (200) according to claim 9.

11. A computer program (320) for estimating movement of a target object (120), the computer program (320) comprising computer code which, when run on processing circuitry (310) of an electronic control unit (200), causes the electronic control unit (200) to:
obtain (S102) a sequence of images from an image capturing system;
detect (S104) a target object (120) in the sequence of images; and
estimate (S106) movement of the target object (120) by firstly applying a first dynamic estimation model to the sequence of images and a secondly applying a second dynamic estimation model to the sequence of images, wherein estimating the movement of the target object (120) comprises:
applying (S106a) the first dynamic estimation model to estimate velocity and position (x, y) of the target object (120), wherein the velocity comprises speed and heading angle of the target object (120), and
applying (S106d) the second dynamic estimation model to estimate pose (150) and yaw rate (α) of the target object (120),
wherein the first dynamic estimation model is used to estimate a first set of properties, defined by the velocity and the position (x, y) of the target object (120), wherein the second dynamic estimation model is used to estimate a second set of properties, defined by the pose (150) and the yaw rate (α), extending the first set of properties, and
wherein output from the first dynamic estimation model is used to initialize the second dynamic estimation model.

12. A computer program product (310) comprising a computer program (320) according to claim 11, and a computer readable storage medium (330) on which the computer program is stored.

## Patentansprüche

1. Verfahren zum Abschätzen einer Bewegung eines Zielobjekts (120), wobei das Verfahren durch eine elektronische Steuerungseinheit (200) durchgeführt wird, das Verfahren Folgendes umfassend:
Ermitteln (S102) einer Bildersequenz aus einem Bildaufnahmesystem;
Detektieren (S104) eines Zielobjekts (120) in der Bildersequenz; und
Abschätzen (S106) einer Bewegung des Zielobjekts (120) erstens durch Anwenden eines ersten dynamischen Abschätzungsmodells an der Bildersequenz und zweitens durch Anwenden eines zweiten dynamischen Abschätzungsmodells an der Bildersequenz, wobei Abschätzen der Bewegung des Zielobjekts (120) Folgendes umfasst:
Anwenden (S106a) des ersten dynamischen Abschätzungsmodells, um Geschwindigkeit und Position (x, y) des Zielobjekts (120) abzuschätzen, wobei die Geschwindigkeit Tempo und Kurswinkel des Zielobjekts (120) umfasst, und
Anwenden (S106d) des zweiten dynamischen Abschätzungsmodells, um Stellung (150) und Gierwinkelrate (α) des Zielobjekts (120) abzuschätzen,
wobei das erste dynamische Abschätzungsmodell verwendet wird, um einen ersten Satz von Eigenschaften abzuschätzen, welcher durch die Geschwindigkeit und die Position (x, y) des Zielobjekts (120) definiert ist, wobei das zweite dynamische Abschätzungsmodell verwendet wird, um einen zweiten Satz von Eigenschaften abzuschätzen, welcher durch die Stellung (150) und die Gierwinkelrate (α) definiert ist und den ersten Satz von Eigenschaften erweitert, und
wobei eine Ausgabe aus dem ersten dynamischen Abschätzungsmodell verwendet wird, um das zweite dynamische Abschätzungsmodell zu initialisieren.

2. Verfahren nach Anspruch 1, wobei das erste dynamische Abschätzungsmodell eine erste Anzahl Betriebszustände aufweist, wobei das zweite dynamische Abschätzungsmodell eine zweite Anzahl Betriebszustände aufweist und wobei die zweite Anzahl höher ist als die erste Anzahl.

3. Verfahren nach einem der vorhergehenden Ansprüche, wobei das zweite dynamische Abschätzungsmodell mindestens eine Eigenschaft des ersten Satzes von Eigenschaften neu parametrisiert.

4. Verfahren nach Anspruch 1, weiterhin Folgendes umfassend:
Ermitteln (S106b) einer Verifizierung aus dem ersten dynamischen Abschätzungsmodell; und
Auslösen (S106c) einer Bewegungsabschätzung des Zielobjekts (120) unter Verwendung des zweiten dynamischen Abschätzungsmodells beim Erhalten der Verifizierung.

5. Verfahren nach Anspruch 4, wobei die Verifizierung angibt, dass genaue Abschätzungen durch das erste dynamische Abschätzungsmodell ermittelt wurden.

6. Verfahren nach einem der vorhergehenden Ansprüche, weiterhin Folgendes umfassend:
Bereitstellen (S108) der abgeschätzten Bewegung des Zielobjekts (120) als Eingabe an mindestens ein Fahrzeugsteuerungssystem (260); und
Durchführen (S110) einer Fahrzeugsteuerung unter Verwendung des mindestens einen Fahrzeugsteuerungssystems (260) und auf der Grundlage der abgeschätzten Bewegung.

7. Verfahren nach Anspruch 6, wobei Durchführen einer Fahrzeugsteuerung mindestens eines des Folgenden umfasst:
Durchführen (S110a) einer dynamische Tempo- und Abstandsregelung (Adaptive Cruise Control, ACC);
Durchführen (S110b) einer automatischen Notbremsung (Automatic Emergency Braking, AEB);
Durchführen (S110c) von autonomem Fahren (Autonomous Driving, AD); und/oder
Bereitstellen (S110d) einer Warnanzeige an eine Benutzerschnittstelle (270).

8. Verfahren nach einem der vorhergehenden Ansprüche, wobei das Zielobjekt (120) ein Fahrzeug ist.

9. Elektronische Steuerungseinheit (200) zum Abschätzen einer Bewegung eines Zielobjekts (120), die elektronische Steuerungseinheit (200) Folgendes umfassend:
ein Ermittlungsmodul (210a), welches eingerichtet ist, um eine Bildersequenz aus einem Bildaufnahmesystem zu ermitteln;
ein Detektionsmodul (210b), welches eingerichtet ist, um ein Zielobjekt (120) in der Bildersequenz zu detektieren; und
ein Abschätzungsmodul (210c), welches eingerichtet ist, um eine Bewegung des Zielobjekts (120) erstens durch Anwenden eines ersten dynamischen Abschätzungsmodells an der Bildersequenz und zweitens durch Anwenden eines zweiten dynamischen Abschätzungsmodells an der Bildersequenz abzuschätzen, wobei die elektronische Steuerungseinheit (200), um die Bewegung des Zielobjekts (120) abzuschätzen, weiterhin Folgendes umfasst:
ein Anwendungsmodul (210d), welches eingerichtet ist, um das erste dynamische Abschätzungsmodell anzuwenden, um Geschwindigkeit und Position (x, y) des Zielobjekts (120) abzuschätzen, wobei die Geschwindigkeit Tempo und Kurswinkel des Zielobjekts (120) umfasst, und
ein Anwendungsmodul (210e), welches eingerichtet ist, um das zweite dynamische Abschätzungsmodell anzuwenden, um Stellung (150) und Gierwinkelrate (α) des Zielobjekts (120) abzuschätzen,
wobei das erste dynamische Abschätzungsmodell verwendet wird, um einen ersten Satz von Eigenschaften abzuschätzen, welcher durch die Geschwindigkeit und die Position (x, y) des Zielobjekts (120) definiert ist, wobei das zweite dynamische Abschätzungsmodell verwendet wird, um einen zweiten Satz von Eigenschaften abzuschätzen, welcher durch die Stellung (150) und die Gierwinkelrate (α) definiert ist und den ersten Satz von Eigenschaften erweitert, und
wobei eine Ausgabe aus dem ersten dynamischen Abschätzungsmodell verwendet wird, um das zweite dynamische Abschätzungsmodell zu initialisieren.

10. Kraftfahrzeug (110), eine elektronische Steuerungseinheit (200) nach Anspruch 9 umfassend.

11. Computerprogramm (320) zum Abschätzen einer Bewegung eines Zielobjekts (120), das Computerprogramm (320) Computercode umfassend, welcher, wenn er auf einem Verarbeitungsschaltkomplex (310) einer elektronischen Steuerungseinheit (200) abläuft, bewirkt, dass die elektronische Steuerungseinheit (200):
eine Bildersequenz aus einem Bildaufnahmesystem ermittelt (S102);
ein Zielobjekt (120) in der Bildersequenz detektiert (S104); und
eine Bewegung des Zielobjekts (120) erstens durch Anwenden eines ersten dynamischen Abschätzungsmodells an der Bildersequenz und zweitens durch Anwenden eines zweiten dynamischen Abschätzungsmodells an der Bildersequenz abschätzt (S106), wobei Abschätzen der Bewegung des Zielobjekts (120) Folgendes umfasst:
Anwenden (S106a) des ersten dynamischen Abschätzungsmodells, um Geschwindigkeit und Position (x, y) des Zielobjekts (120) abzuschätzen, wobei die Geschwindigkeit Tempo und Kurswinkel des Zielobjekts (120) umfasst, und
Anwenden (S106d) des zweiten dynamischen Abschätzungsmodells, um Stellung (150) und Gierwinkelrate (α) des Zielobjekts (120) abzuschätzen, wobei das erste dynamische Abschätzungsmodell verwendet wird, um einen ersten Satz von Eigenschaften abzuschätzen, welcher durch die Geschwindigkeit und die Position (x, y) des Zielobjekts (120) definiert ist, wobei das zweite dynamische Abschätzungsmodell verwendet wird, um einen zweiten Satz von Eigenschaften abzuschätzen, welcher durch die Stellung (150) und die Gierwinkelrate (α) definiert ist und den ersten Satz von Eigenschaften erweitert, und
wobei eine Ausgabe aus dem ersten dynamischen Abschätzungsmodell verwendet wird, um das zweite dynamische Abschätzungsmodell zu initialisieren.

12. Computerprogrammprodukt (310), ein Computerprogramm (320) nach Anspruch 11 und ein computerlesbares Speichermedium (330) umfassend, auf welchem das Computerprogramm gespeichert ist.

## Revendications

1. Procédé d'estimation du mouvement d'un objet cible (120), le procédé étant réalisé au moyen d'une unité de commande électronique (200), le procédé comprenant :
l'obtention (S102) d'une séquence d'images à partir d'un système de capture d'image ;
la détection (S104) d'un objet cible (120) dans la séquence d'images ; et
l'estimation (S106) du mouvement de l'objet cible (120) en appliquant en premier lieu un premier modèle d'estimation dynamique à la séquence d'images et en appliquant en second lieu un deuxième modèle d'estimation dynamique à la séquence d'images, dans lequel l'estimation du mouvement de l'objet cible (120) comprend :
l'application (S106a) du premier modèle d'estimation dynamique afin d'estimer la vélocité et la position (x, y) de l'objet cible (120), dans lequel la vélocité comprend une vitesse et un angle de cap de l'objet cible (120), et
l'application (S106d) du deuxième modèle d'estimation dynamique afin d'estimer la pose (150) et la vitesse de lacet (α) de l'objet cible (120),
dans lequel le premier modèle d'estimation dynamique est utilisé pour estimer un premier ensemble de propriétés, définies par la vélocité et la position (x, y) de l'objet cible (120), dans lequel le deuxième modèle d'estimation dynamique est utilisé pour estimer un deuxième ensemble de propriétés, définies par la pose (150) et la vitesse de lacet (α), étendant le premier ensemble de propriétés, et
dans lequel un résultat provenant du premier modèle d'estimation dynamique est utilisé pour initialiser le deuxième modèle d'estimation dynamique.

2. Procédé selon la revendication 1, dans lequel le premier modèle d'estimation dynamique comporte un premier nombre d'états de fonctionnement, dans lequel le deuxième modèle d'estimation dynamique comporte un deuxième nombre d'états de fonctionnement, dans lequel le deuxième nombre est supérieur au premier nombre.

3. Procédé selon l'une quelconque des revendications précédentes, dans lequel le deuxième modèle d'estimation dynamique paramètre de nouveau au moins une propriété du premier ensemble de propriétés.

4. Procédé selon la revendication 1, comprenant en outre :
l'obtention (S106b) d'une vérification provenant du premier modèle d'estimation dynamique ; et
le déclenchement (S106c) de l'estimation du mouvement de l'objet cible (120) en utilisant le deuxième modèle d'estimation dynamique après avoir reçu la vérification.

5. Procédé selon la revendication 4, dans lequel la vérification indique des estimations précises ayant été obtenues au moyen du premier modèle d'estimation dynamique.

6. Procédé selon l'une quelconque des revendications précédentes, comprenant en outre :
l'apport (S108) du mouvement estimé de l'objet cible (120) en tant qu'entrée à au moins un système de commande de véhicule (260) ; et
la réalisation (S110) d'une commande de véhicule en utilisant l'au moins un système de commande de véhicule (260) et basé sur le mouvement estimé.

7. Procédé selon la revendication 6, dans lequel la réalisation de la commande de véhicule comprend au moins l'un parmi :
la réalisation (S110a) d'un régulateur de vitesse adaptif (ACC) ;
la réalisation (S110b) d'un freinage d'urgence automatique (AEB) ;
la réalisation (S110c) d'une conduite autonome (AD) ; et/ou
l'apport (S110d) d'une indication d'avertissement à une interface utilisateur (270).

8. Procédé selon l'une quelconque des revendications précédentes, dans lequel l'objet cible (120) est un véhicule.

9. Unité de commande électronique (200) permettant d'estimer le mouvement d'un objet cible (120), l'unité de commande électronique (200) comprenant :
un module d'obtention (210a) conçu pour obtenir une séquence d'images à partir d'un système de capteur d'image ;
un module de détection (210b) conçu pour détecter un objet cible (120) dans la séquence d'images ; et
un module d'estimation (210c) conçu pour estimer le mouvement de l'objet cible (120) en appliquant en premier lieu un premier modèle d'estimation dynamique à la séquence d'images et en appliquant en second lieu un deuxième modèle d'estimation dynamique à la séquence image, dans laquelle l'unité de commande électronique (200) comprend en outre, de manière à estimer le mouvement de l'objet cible (120) :
un module d'application (210d) conçu pour appliquer le premier modèle d'estimation dynamique afin d'estimer la vélocité et la position (x, y) de l'objet cible (120), dans laquelle la vélocité comprend une vitesse et un angle de cap de l'objet cible (120), et
un module d'application (210e) conçu pour appliquer le deuxième modèle d'estimation dynamique afin d'estimer la pose (150) et la vitesse de lacet (α) de l'objet cible (120),
dans laquelle le premier modèle d'estimation dynamique est utilisé pour estimer un premier ensemble de propriétés, définies par la vélocité et la position (x, y) de l'objet cible (120), dans laquelle le deuxième modèle d'estimation dynamique est utilisé pour estimer un deuxième ensemble de propriétés, définies par la pose (150) et la vitesse de lacet (α), étendant le premier ensemble de propriétés, et
dans laquelle un résultat provenant du premier modèle d'estimation dynamique est utilisé pour initialiser le deuxième modèle d'estimation dynamique.

10. Véhicule automobile (110) comprenant une unité de commande électronique (200) selon la revendication 9.

11. Programme informatique (320) permettant d'estimer le mouvement d'un objet cible (120), le programme informatique (320) comprenant un code informatique qui, lorsqu'il est exécuté sur un circuit de traitement (310) d'une unité de commande électronique (200), amène l'unité de commande électronique (200) à :
obtenir (S102) une séquence d'images à partir de de capture d'image ;
détecter (S104) un objet cible (120) dans la séquence d'images ; et
estimer (S106) le mouvement de l'objet cible (120) en appliquant en premier lieu un premier modèle d'estimation dynamique à la séquence d'images et en appliquant en second lieu un deuxième modèle d'estimation dynamique à la séquence image, dans lequel l'estimation du mouvement de l'objet cible (120) comprend :
l'application (S106a) du premier modèle d'estimation dynamique afin d'estimer la vélocité et la position (x, y) de l'objet cible (120), dans lequel la vélocité comprend une vitesse et un angle de cap de l'objet cible (120), et
l'application (S106d) du deuxième modèle d'estimation dynamique afin d'estimer la pose (150) et la vitesse de lacet (α) de l'objet cible (120),
dans lequel le premier modèle d'estimation dynamique est utilisé pour estimer un premier ensemble de propriétés, définies par la vélocité et la position (x, y) de l'objet cible (120), dans lequel le deuxième modèle d'estimation dynamique est utilisé pour estimer un deuxième ensemble de propriétés, définies par la pose (150) et la vitesse de lacet (α), étendant le premier ensemble de propriétés, et
dans lequel un résultat provenant du premier modèle d'estimation dynamique est utilisé pour initialiser le deuxième modèle d'estimation dynamique.

12. Produit de programme informatique (310) comprenant un programme informatique (320) selon la revendication 11, et un support de stockage lisible par ordinateur (330) sur lequel le programme informatique est stocké.
